# EUROPÄISCHE PATENTSCHRIFT

(11) **EP 2 753 517 B1**
(45) Veröffentlichungstag und Bekanntmachung des Hinweises auf die Patenterteilung: **30.03.2016**
(21) Anmeldenummer: 12756718.8
(22) Anmeldetag: 07.09.2012
(51) Int. Cl.: B60T 13/66, B60T 17/22, B61K 9/12, F16D 66/00

(54) **VERFAHREN ZUM ÜBERWACHEN EINES RADES EINES SCHIENENFAHRZEUGES**
METHOD FOR MONITORING A WHEEL OF A RAIL VEHICLE
PROCÉDÉ DESTINÉ À CONTRÔLER UNE ROUE DE VÉHICULE FERROVIAIRE

(30) Priorität: 09.09.2011 DE 102011113090
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: HERDEN, Marc-Oliver, 81377 München (DE); RAU, Rainer, 82538 Geretsried (DE); HAUPT, Robert, 81379 München (DE); ELSTORPFF, Marc-Gregory, München 80638 (DE)
(86) Internationale Anmeldenummer: PCT/EP2012/067544
(87) Internationale Veröffentlichungsnummer: WO 2013/034713

(56) Entgegenhaltungen:
- EP-A2- 1 209 052
- WO-A1-2008/141775
- DE-A1- 4 242 392

## Beschreibung

Die Erfindung betrifft allgemein Fahrzeuge und insbesondere Schienenfahrzeuge. Weiterhin betrifft die Erfindung ein Verfahren zum Überwachen eines an einem Drehgestell eines Schienenfahrzeuges gelagerten Rades und eine Steuervorrichtung zur Durchführung des Verfahrens.

Aus der DE 42 42 392 A1 ist ein Schienenfahrzeug bekannt.

Es ist Aufgabe der Erfindung, das bekannte Schienenfahrzeug zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Überwachen des Funktionsfähigkeitszustandes eines an einem Drehgestell eines Schienenfahrzeuges gelagerten Rades die Schritte:
- Erfassen einer Verformung einer Bremse zum Abbremsen des Rades in Radumfangsrichtung des Rades, und
- Plausibilisieren der erfassten Verformung basierend auf einer Gegenüberstellung mit einer Solllage.

Dem angegebenen Verfahren liegt die Überlegung zugrunde, dass sich aus der Belastung der Bremse am Schienenfahrzeug verschiedene Informationen hinsichtlich des Zustands des Rades oder dessen Lage erfassen lassen. Da die Schiene im Idealfall eben ist, dürfte sich die Bremse im Normalbetrieb nicht oder nur in einer erwarteten Weise, wie beispielsweise während eines Bremsvorgangs verformen. Verformt sich die Bremse dennoch in einer nicht erwarteten Weise, so kann dies nur aus Erschütterungen auf die Bremse heraus geschehen, die beispielsweise durch Fehler am Rad wie Unrundheiten oder Fehler an der Fahrtroute des Schienenfahrzeuges, wie beispielsweise einer Entgleisung des Schienenfahrzeuges verursacht sein müssen.

Die Verformung der Bremse kann mit jedem beliebigen Sensor erfasst werden, der zur Erfassung einer der Verformung beispielsweise anhand einer relativen Verschiebung zweier Punkte auf der Bremse zueinander geeignet ist. Ein solcher Sensor wäre beispielsweise ein Dehnungsmessstreifen.

Die Plausibilisierung kann beliebig erfolgen. Ziel der Plausibilisierung ist es, Abweichungen der Verformung der Bremse von einer erwarteten Verformung der Bremse zu identifizieren, und aus diesen Abweichungen dann fehlerhafte Zustände für das Rad und/oder das Schienenfahrzeug abzuleiten.

Zwar kann die Verformung der Bremse zu jedem beliebigen Zeitpunkt bestimmt werden. Wird die Bremse beispielsweise nicht betätigt, so könnte prinzipiell jede Verformung der Bremse aus einer Erschütterung des Rades her rühren, weil das Schienenfahrzeug theoretisch erschütterungsfrei über eine ebene Schiene fährt. In einer Weiterbildung umfasst das angegebene Verfahren den Schritt Erfassen der Verformung der Bremse während eines Bremsvorgangs des Schienenfahrzeuges. Der Weiterbildung liegt die Überlegung zugrunde, dass aus der erfassten Verformung der Bremse die an einem Rad wirksame Bremskraft in Radumfangsrichtung des Rades ermittelt werden könnte, die sich unter Berücksichtigung der aufgebrachten tatsächlichen Bremskraft und des Reibbeiwertes der Bremsscheibe, an dem die tatsächliche Bremskraft ansetzt ergibt. Mit dem angegebenen Verfahren könnte die erfasste Verformung der Bremse über die Erfassung dieser wirksamen Bremskraft in Radumfangsrichtung des Rades hinaus auch zur Zustandsüberwachung des Rades verwendet werden.

In einer besonderen Weiterbildung ist die erfasste Verformung der Bremse von einer auf das Rad wirkenden Bremskraft abhängig.

In einer bevorzugten Weiterbildung umfasst das angegebene Verfahren den Schritt Filtern der erfassten Verformung der Bremse vor dem Plausibilisieren der erfassten relativen Lage. Dem angegebenen Verfahren liegt die Überlegung zugrunde, dass die erfasste Verformung der Bremse ein Spektrum aufweisen könnte, in dem viele verschiedene Informationen umfasst sind. Um die Plausibilisierung so zuverlässig wie möglich zu gestalten sollten aus diesem Spektrum alle bekannten Informationen herausgefiltert werden, so dass in der erfassten relativen Lage nur noch ein Rauschanteil übrig bleibt, in dem letztendlich die Information über den oben genannten Zustand des Rades oder dessen Lage verbleibt.

In einer besonders bevorzugten Weiterbildung des angegebenen Verfahrens umfasst die Filterung der erfassten Verformung der Bremse eine Trennung einer durch die Bremskraft verursachten Verformung der Bremse, also der erwarteten Verformung von der erfassten Verformung der Bremse.

In einer anderen Weiterbildung des angegebenen Verfahrens umfasst das angegebene Verfahren den Schritt:
- Detektieren einer Entgleisung des Schienenfahrzeuges, wenn ein Ausschlag der erfassten Verformung der Bremse einen vorbestimmten Wert überschreitet.

In einer noch anderen Weitebildung umfasst das angegebene Verfahren den Schritt:
- Detektieren einer Unwucht des Rades, wenn die erfasste Verformung der Bremse eine Oberschwingung umfasst, deren Frequenz der Radumdrehung des Rades oder einem Vielfachen der Radumdrehung des Rades entspricht.

Vorzugsweise wird die erfasste Verformung der Bremse hinsichtlich der Unwucht des Rades auf eine Unrundheit und/oder eine Flachstelle analysiert.

Gemäß einem weiteren Aspekt der Erfindung ist eine Steuervorrichtung eingerichtet, eines der angegebenen Verfahren durchzuführen. Die Steuervorrichtung kann dabei insbesondere derart erweitert werden, dass sie eingerichtet ist, ein Verfahren gemäß einem der Unteransprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Schienenfahrzeuges eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- Fig. 1: ein auf einer Schiene fahrendes Schienenfahrzeug, und
- Fig. 2: ein zu analysierendes Bremssignal zeigen.

In den Figuren werden gleiche technische Elemente mit gleichen Bezugszeichen versehen und nur einmal beschrieben.

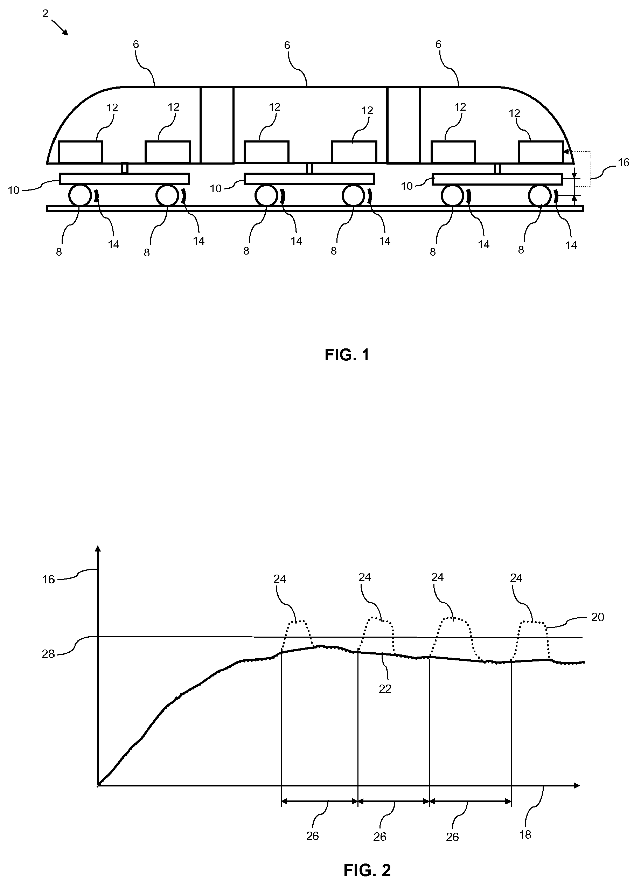

Es wird auf Fig. 1 Bezug genommen, ein Schienenfahrzeug 2 auf einer Schiene 4 zeigt.

Das Schienenfahrzeug 2 umfasst in der vorliegenden Ausführung drei Waggons 6, die je über zwei Räder 8 rollend auf der Schiene 4 getragen werden. Die Räder 8 an jedem Waggon 6 sind an einem ortsfest mit dem Schienenfahrzeug 2 verbundenen Drehgestell 10 verbunden. Demgegenüber können sich die Räder 8 gegenüber dem Drehgestell 10 bewegen, weil diese beispielsweise über eine nicht weiter dargestellte Federung mit dem Drehgestell 10 verbunden sind.

In der vorliegenden Ausführung ist jedem Rad 8 eine Steuervorrichtung 12 zugeordnet, die beispielsweise zum Ansteuern eine Bremse 14 des Rades basierend auf einem nicht näher gezeigten Bremssollwert vorgesehen sein kann. Der Bremssollwert wird in der vorliegenden Ausführung einem Bremsistwert 16 gegenübergestellt, um die Bremswirkung der Bremse zu regeln. Diesem Bremsistwert liegt die Überlegung zugrunde, dass die Bremswirkung der Bremse 14 von einem Reibbeiwert zweier Bremspartner der Bremse 14 während der Bremsung, wie beispielsweise einer Bremsscheibe und einem Reibbelag, abhängt. Um diesen Reibbeiwert zu berücksichtigen wird als Istwert die ausgehend von der mit der Bremse 14 aufgebrachten Bremskraft die bedingt durch den Reibbeiwert tatsächliche an der Bremsscheibe ankommende Bremskraft ermittelt, die sich geometrisch gesehen aus einer Verformung der Bremse 14 in Radumfangsrichtung des ihr zugeordneten Rades 8 ergibt. Der Bremsistwert 16 ist damit von der zuvor beschriebenen Verformung der Bremse 14 in Radumfangsrichtung des Rades 8 abhängig, weshalb die Bremsregelung über die Verformung der Bremse 14 als Bremsistwert 16 erfolgt.

Der vorliegenden Ausführung liegt die Überlegung zugrunde, dass jedoch auch Erschütterungen und andere mechanische Belastungen einen Einfluss auf die Verformung der Bremse 14 in Radumfangsrichtung des Rades 8 haben könnten. Diese Erschütterungen können aus Unrundheiten des Rades 8 oder sogar einer Entgleisung des Schienenfahrzeuges 2 her rühren.

Diese Erschütterungen zeigen sich in der Verformung der Bremse 14 als ungewolltes Rauschen und damit als Störgröße für die Regelung.

Jedoch können diese Erschütterungen in der Verformung der Bremse 14 und damit im Bremsistwert 16 erkannt werden, weil sie eine ganz bestimmte Struktur aufweisen. Es wird daher mit der vorliegenden Ausführung vorgeschlagen, den Bremsistwert 16 mit der Steuervorrichtung 12 nach diesen ganz bestimmten Strukturen hin zu analysieren. Findet sich eine dieser Strukturen im Bremsistwert 16 so kann auf einen entsprechenden der bestimmten Struktur zugeordneten Fehler, wie eine Unrundheit des Rades oder ein Entgleisen geschlossen werden.

In Fig. 1 ist die entsprechende Ausgabe des Bremsistwertes 16 nur an eine der Steuervorrichtungen 12 gezeigt. Sie kann aber mit jeder einzelnen der Steuervorrichtungen 12 in der zuvor genannten Weise überwacht und analysiert werden.

Es wird auf Fig. 2 Bezug genommen, in der in einem Diagramm die der Bremsistwert 16 über die Zeit 18 in gepunkteter Linie 20 für ein eine Unwucht aufweisendes Rad 8 und in durchgezogener Linie 22 für ein Rad 8 ohne Unwucht aufgetragen ist.

Wie aus Fig. 2 ersichtlich, führt die Unwucht zu Ausschlägen 24 in der Verformung der Bremse 14 und damit im Bremsistwert 16.

Um diese Ausschläge 24 besser zu erkennen kann aus dem mit der gepunkteten Linie 20 dargestellten erfassten Bremsistwert 16 der mit der durchgezogenen Linie 22 dargestellte erwartete Bremsistwert 16 herausgefiltert werden, der sich eigentlich in einem erschütterungsfreien Zustand des Schienenfahrzeuges 2 ergeben sollte, sofern dieser Idealverlauf des Bremsistwertes 16 bekannt ist. Basierend auf einem zeitlichen Abstand 26 der Ausschläge 24 zueinander und einem Schwellwert 28 für die Ausschläge 24 kann zwischen einer Unwucht des Rades 8 und einem Entgleisen des Schienenfahrzeuges 2 unterschieden werden.

Die Filterung des Bremsistwertes 16 und damit der Verformung der Bremse 14 in Radumfangsrichtung des Rades 8 kann über die Filterung eines erwarteten Verlaufes des Bremsistwerts 16 auf andere erwartete Verläufe des Bremsistwertes 16 ausgedehnt werden, sofern diese Verläufe Effekten an der Bremse 14 zugeordnet werden können, die für die Erfassung von Unwuchten des Rades 8 und einer Entgleisung des Schienenfahrzeuges 2 nicht interessant sind.

## Patentansprüche

1. Verfahren zum Überwachen des Funktionsfähigkeitszustandes eines an einem Drehgestell (10) eines Schienenfahrzeuges (2) gelagerten Rades (8) umfassend:
- Erfassen einer Verformung (16) einer Bremse (14) zum Abbremsen des Rades (8) in Radumfangsrichtung des Rades (8), und
- Plausibilisieren der erfassten Verformung (16) basierend auf einer Gegenüberstellung mit einer Solllage (22).

2. Verfahren nach Anspruch 1, umfassend:
- Erfassen der Verformung (16) der Bremse (14) während eines Bremsvorgangs des Schienenfahrzeuges (2).

3. Verfahren nach Anspruch 1 oder 2, wobei die erfasste Verformung (16) der Bremse (14) von einer auf das Rad (8) wirkenden Bremskraft abhängig ist.

4. Verfahren nach einem der vorstehenden Ansprüche, umfassend:
- Filtern der erfassten Verformung (16) der Bremse (14) vor dem Plausibilisieren der erfassten relativen Lage (16).

5. Verfahren nach Anspruch 4, wobei die Filterung der erfassten Verformung (16) der Bremse (14) eine Trennung einer durch die Bremskraft verursachten Verformung (22) von der erfassten Verformung (16) umfasst.

6. Verfahren nach einem der vorstehenden Ansprüche, umfassend:
- Detektieren einer Entgleisung des Schienenfahrzeuges (2), wenn ein Ausschlag (24) der erfassten Verformung (16) einen vorbestimmten Wert (28) überschreitet.

7. Verfahren nach einem der vorstehenden Ansprüche, umfassend:
- Detektieren einer Unwucht des Rades (8), wenn die erfasste Verformung (16) eine Oberschwingung umfasst, deren Frequenz (26) der Radumdrehung des Rades (8) oder einem Vielfachen der Radumdrehung des Rades (8) entspricht.

8. Verfahren nach Anspruch 7, wobei die Unwucht des Rades (8) eine Unrundheit und/oder eine Flachstelle umfasst.

9. Steuervorrichtung (12) zur Durchführung eines Verfahrens nach einem der vorstehenden Ansprüche.

10. Schienenfahrzeug (2) umfassend eine Steuervorrichtung (12) nach Anspruch 9.

## Claims

1. Method for monitoring the functionality status of a wheel (8) mounted on a bogie (10) of a rail vehicle (2), comprising:
- detecting a deformation (16) of a brake (14) for braking the wheel (8) in the circumferential direction of the wheel (8), and
- performing a plausibility check on the detected deformation (16) on the basis of a comparison with a target position (22).

2. Method according to claim 1, comprising:
- detecting the deformation (16) of the brake (14) during a braking process of the rail vehicle (2).

3. Method according to claim 1 or 2, wherein the detected deformation (16) of the brake (14) is dependent on a braking force acting on the wheel (8).

4. Method according to one of the preceding claims, comprising:
- filtering the detected deformation (16) of the brake (14) before the plausibility check on the detected relative position (16).

5. Method according to claim 4, wherein the filtering of the detected deformation (16) of the brake (14) comprises a separation of a deformation (22) caused by the braking force from the detected deformation (16).

6. Method according to one of the preceding claims, comprising:
- detecting a derailment of the rail vehicle (2) if an excursion (24) of the detected deformation (16) exceeds a predetermined value (28).

7. Method according to one of the preceding claims, comprising:
- detecting an imbalance of the wheel (8) if the detected deformation (16) comprises a harmonic with a frequency (26) corresponding to the rotation of the wheel (8) or to a multiple of the rotation of the wheel (8).

8. Method according to claim 7, wherein the imbalance of the wheel (8) comprises an out-of-roundness and/or a flat spot.

9. Control device (12) for carrying out a method according to one of the preceding claims.

10. Rail vehicle (2) comprising a control device (12) according to claim 9.

## Revendications

1. Procédé de contrôle de l'état d'aptitude à fonctionner d'une roue (8) montée sur un boggie (10) d'un véhicule (2) ferroviaire, comprenant:
- détecter une déformation (16) d'un frein (14) de freinage de la roue (8) dans la direction périphérique de la roue (8) et
- apprécier la vraisemblance de la déformation (16) détectée sur la base d'une confrontation à une position (22) de consigne.

2. Procédé suivant la revendication 1, comprenant:
- détecter la déformation (16) du frein (14) pendant une opération de freinage du véhicule (2) ferroviaire.

3. Procédé suivant la revendication 1 ou 2, dans lequel la déformation (16) détectée du frein (14) dépend d'une force de freinage agissant sur la roue (8).

4. Procédé suivant l'une des revendications précédentes, comprenant:
- filtrer la déformation (16) du frein (14) avant l'appréciation de vraisemblance de la position (16) relative détectée.

5. Procédé suivant la revendication 4, dans lequel le filtrage de la déformation (16) détectée du frein (14) comprend séparer de la déformation (16) détectée une déformation (22) provoquée par la force de freinage.

6. Procédé suivant l'une des revendications précédentes, comprenant:
- détecter un déraillement du véhicule (2) ferroviaire si une déviation (24) de la déformation (16) détectée dépasse une valeur (28) définie à l'avance.

7. Procédé suivant l'une des revendications précédentes, comprenant:
- détecter un balourd de la roue (8) si la déformation (16) détectée comprend un harmonique, dont la fréquence (26) correspond à un tour de la roue (8) ou à un multiple du tour de la roue (8).

8. Procédé suivant la revendication 7, dans lequel le balourd de la roue (8) comprend un défaut de circularité et/ou une zone plane.

9. Dispositif (12) de commande pour effectuer un procédé suivant l'une des revendications précédentes

10. Véhicule (2) ferroviaire comprenant un dispositif (12) de commande suivant la revendication 9.
